# EUROPEAN PATENT APPLICATION

(11) **EP 4 830 918 A1**
(43) Date of publication of application: **28.10.2026**
(21) Application number: 24907373.5
(22) Date of filing: 16.12.2024
(51) Int. Cl.: B32B 27/32, B32B 27/12, B32B 27/18, D06N 7/00

(54) **FLAME-RETARDANT POLYOLEFIN-BASED REINFORCED CURTAIN**

(30) Priority: 19.12.2023 JP 2023214007
(71) Applicant: Toppan Holdings Inc., Tokyo 110-0016 (JP)
(72) Inventor: FURUYA, Seiji, Tokyo 110-0016 (JP); FUKAYA, Masashi, Tokyo 110-0016 (JP); NISHIDA, Asami, Tokyo 110-0016 (JP)
(74) Representative: TBK
(86) International application number: PCT/JP2024/044440
(87) International publication number: WO 2025/134988

(57) **Abstract**

A flame-retardant polyolefin-based reinforced sheet includes a flame-retardant layer containing a polyolefin-based resin and a flame retardant, and a reinforcement layer constituted of polyolefin-based fibers. A recycled resin obtained by subjecting the flame-retardant polyolefin-based reinforced sheet to material recycling has a melt flow rate of 10 g/10min or more and 50 g/10 min or less at 230°C with a load of 2.16 kg.

## Description

### [Technical Field]

The present disclosure relates to flame-retardant polyolefin-based reinforced sheets.

### [Background Art]

Tarpaulin sheets which are made of a polyester-based fiber substrate and a polyvinyl chloride resin layer laminated thereon have been used as large advertising sheets or as large protection sheets used at construction sites. However, tarpaulin sheets, while having excellent strength and flame retardancy, cause a large environmental burden when disposed of because they contain a polyvinyl chloride resin.

As a measure against this, there has been proposed a sheet in which a polyolefin-based resin layer containing a flame retardant is laminated on a polyolefin-based fiber substrate (e.g., see PTLs 1 and 2). Such sheets not only have good properties such as strength and flame retardancy but also have recyclability, and therefore cause only a small environmental burden when disposed of.

### [Citation List]

### [Patent Literature]

PTL 1: JP2021109345A
PTL 2: JP202311232A

### [Summary of the Invention]

### [Technical Problem]

As awareness of a sustainable society grows worldwide, the importance of recycling resin products is also increasing more. Therefore, it is desired not only that the above-mentioned sheets are simply recyclable, but also that a higher quality resin can be obtained from the recycling processing in terms of processability and the like.

### [Solution to Problems]

To solve the above issues, some aspects of a flame-retardant polyolefin-based reinforced sheet are provided below.

[Aspect 1] A flame-retardant polyolefin-based reinforced sheet, including a flame-retardant layer containing a polyolefin-based resin and a flame retardant; and a reinforcement layer constituted of polyolefin-based fibers, wherein a recycled resin obtained by subjecting the reinforced sheet to material recycling has a melt flow rate of 10 g/10 min or more and 50 g/10 min or less at 230°C with a load of 2.16 kg.

With this configuration, the recycled resin achieves good processability for injection molding or extrusion molding.

[Aspect 2] The flame-retardant polyolefin-based reinforced sheet according to [Aspect 1], wherein the flame-retardant layer contains a bromine-based compound as the flame retardant and a white pigment; and the flame-retardant layer contains, by mass ratio, 40% or more and 80% or less of the polyolefin-based resin, 10% or more and 20% or less of the bromine-based compound, and 3% or more and 20% or less of the white pigment.

With this configuration, flame retardancy of the flame-retardant layer can be reliably ensured and concealability is suitably achieved by the white pigment. Also, good physical properties are easily obtained for the recycled resin of the reinforced sheet.

[Aspect 3] The flame-retardant polyolefin-based reinforced sheet according to [Aspect 1] or [Aspect 2], wherein the flame-retardant layer is constituted of a resin composition having a melt flow rate of 8 g/10 min or more and 30 g/10 min or less at 230°C with a load of 2.16 kg.

With this configuration, the resin composition achieves high suitability for T-die extrusion molding. By forming the flame-retardant layer using T-die extrusion molding, the flame-retardant layer can have a reduced thickness, resultantly reducing the weight of the reinforced sheet.

[Aspect 4] The flame-retardant polyolefin-based reinforced sheet according to any one of [Aspect 1] to [Aspect 3], wherein the flame-retardant layer has a thickness of 30 µm or more and 200 µm or less.

With this configuration, the reinforced sheet can have a reduced weight.

[Aspect 5] The flame-retardant polyolefin-based reinforced sheet according to any one of [Aspect 1] to [Aspect 4], wherein the polyolefin-based fibers have a dry-heat dimensional change ratio in a range of -5% to -50% at 150°C.

With this configuration, thermal contraction occurs in the reinforcement layer when the reinforced sheet is ignited, which moves away from the fire source and at the same time allows the residual flame in the molten portions to self-extinguish.

[Aspect 6] The flame-retardant polyolefin-based reinforced sheet according to any one of [Aspect 1] to [Aspect 5], wherein the flame-retardant layer is constituted of a resin composition having a melt flow rate lower than that of the resin constituting the polyolefin-based fibers.

[Aspect 7] The flame-retardant polyolefin-based reinforced sheet according to any one of [Aspect 1] to [Aspect 6], wherein the flame-retardant layer is constituted of a resin composition having a flexural modulus lower than that of the resin constituting the polyolefin-based fibers.

With this configuration, the reinforcement function of the reinforcement layer is reliably ensured, and at the same time the resin forming the flame-retardant layer compensates the physical properties of the resin forming the reinforcement layer, resultantly suppressing the occurrence of unevenness in the properties of the recycled resin of the reinforced sheet, thereby achieving a high-quality recycled resin.

[Aspect 8] The flame-retardant polyolefin-based reinforced sheet according to any one of [Aspect 1] to [Aspect 7], including one reinforcement layer and two flame-retardant layers sandwiching the reinforcement layer.

With this configuration, strength is enhanced compared to a two-layer structure. Furthermore, since the reinforced sheet will also have enhanced rigidity, the reinforced sheet can be easily handled during the printing step, etc. In addition, the reinforced sheet is less likely to undergo warpage.

[Aspect 9] The flame-retardant polyolefin-based reinforced sheet according to any one of [Aspect 1] to [Aspect 7], including one flame-retardant layer and two reinforcement layers sandwiching the flame-retardant layer.

With this configuration, strength is enhanced compared to a two-layer structure. Furthermore, since the reinforced sheet will also have enhanced rigidity, the reinforced sheet can be easily handled during the printing step, etc. In addition, since the unique texture of fabric is apparent in the appearance of the reinforced sheet, the reinforced sheet can also have enhanced aesthetic properties. Furthermore, visibility of wrinkles can also be suppressed on the surface of the reinforced sheet.

[Aspect 10] The flame-retardant polyolefin-based reinforced sheet according to any one of [Aspect 1] to [Aspect 9], wherein the reinforced sheet has a printable surface.

With this configuration, the reinforced sheet can be preferably used as a decorative material.

[Aspect 11] The flame-retardant polyolefin-based reinforced sheet according to [Aspect 10], wherein the polyolefin-based fibers contain a pigment.

With this configuration, concealability is enhanced by the reinforcement layer, and visibility via the sheet can be suppressed if printing is provided to the surface of the reinforced sheet. Thus, the reinforced sheet can be preferably used as a decorative material.

### [Advantageous Effects of the Invention]

According to the present disclosure, a recycled resin having high processability can be obtained.

### [Brief Description of the Drawings]

Fig. 1 is a diagram illustrating a cross-sectional structure of a first example of a flame-retardant polyolefin-based reinforced sheet according to an embodiment.
Fig. 2 is a diagram illustrating across-sectional structure of a second example of a flame-retardant polyolefin-based reinforced sheet according to an embodiment.
Fig. 3 is a diagram illustrating a cross-sectional structure of a third example of a flame-retardant polyolefin-based reinforced sheet according to an embodiment.
Fig. 4 is a diagram illustrating a cross-sectional structure of a modification of the first example of a flame-retardant polyolefin-based reinforced sheet.
Fig. 5 is a diagram illustrating a cross-sectional structure of a modification of the second example of a flame-retardant polyolefin-based reinforced sheet.
Fig. 6 is a diagram illustrating a cross-sectional structure of a modification of the third example of a flame-retardant polyolefin-based reinforced sheet.

### [Description of the Embodiments]

Referring to the drawings, an embodiment of a flame-retardant polyolefin-based reinforced sheet will be described. The flame-retardant polyolefin-based reinforced sheet according to the present embodiment may be used as a decorative material or may be used as a protection material at construction sites, etc. If the flame-retardant polyolefin-based reinforced sheet is used as a decorative material, printing may be provided to the surface of the sheet for use as advertising sheets, banners, hanging banners, etc.

### [Layer structure of flame-retardant polyolefin-based reinforced sheet]

The flame-retardant polyolefin-based reinforced sheet includes a flame-retardant layer containing a polyolefin-based resin and a flame retardant, and a reinforcement layer that is a substrate constituted of polyolefin-based fibers.

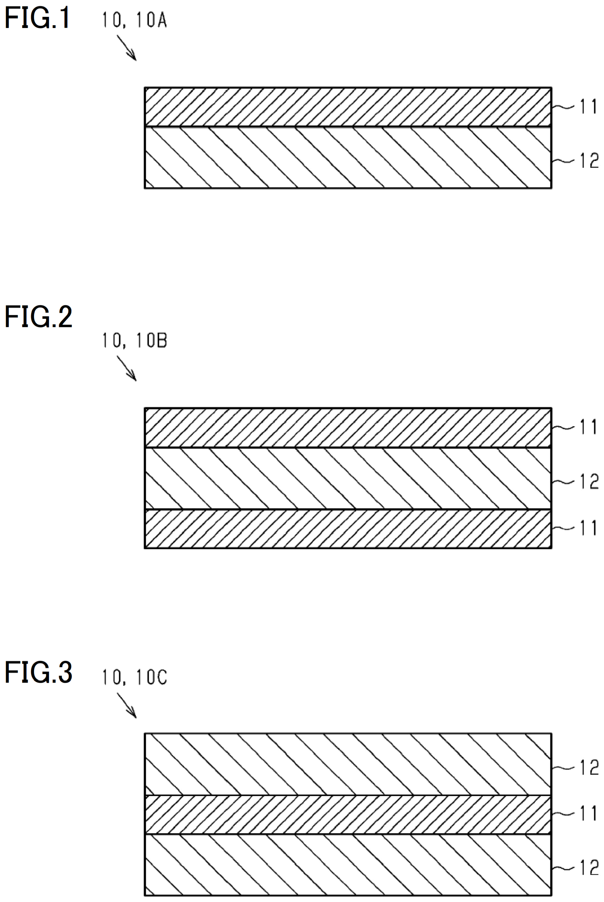

Fig. 1 shows a first example of a layer structure of a flame-retardant polyolefin-based reinforced sheet 10. A reinforced sheet 10A, that is the first example of the flame-retardant polyolefin-based reinforced sheet 10, includes one flame-retardant layer 11 and one reinforcement layer 12. The flame-retardant layer 11 is supported by the reinforcement layer 12.

According to the first example in which the reinforced sheet has a two-layer structure, the weight of the sheet can be reduced.

Fig. 2 shows a second example of a layer structure of the flame-retardant polyolefin-based reinforced sheet 10. A reinforced sheet 10B, that is the second example of the flame-retardant polyolefin-based reinforced sheet 10, includes two flame-retardant layers 11 and one reinforcement layer 12. The reinforcement layer 12 is sandwiched between the two flame-retardant layers 11.

According to the second example in which the reinforced sheet has a three-layer structure, the strength can be enhanced compared to a two-layer structure. Furthermore, since the reinforced sheet will also have enhanced rigidity, the reinforced sheet can be easily handled during the printing step, etc. Also, since both sides of the reinforcement layer 12 are covered by the respective flame-retardant layers 11, warpage due to material difference between the front and rear is less likely to occur in the reinforced sheet.

Fig. 3 shows a third example of a layer structure of the flame-retardant polyolefin-based reinforced sheet 10. A reinforced sheet 10C, that is the third example of the flame-retardant polyolefin-based reinforced sheet 10, includes one flame-retardant layer 11 and two reinforcement layers 12. The flame-retardant layer 11 is sandwiched between the two reinforcement layers 12.

According to the third example, as in the second example, the effect of the reinforced sheet having a three-layer structure can be achieved. Since the reinforcement layer 12 that is a fiber substrate is provided as a front layer of the reinforced sheet, the unique texture of fabric is apparent in the appearance of the reinforced sheet. Thus, the aesthetic properties of the reinforced sheet can also be enhanced. Also, visibility of wrinkles can also be suppressed on the surface of the reinforced sheet.

In the above aspects, the flame-retardant layer 11 is formed using T-die extrusion molding, calendar molding, inflation molding, etc. When forming a thin flame-retardant layer 11 having a thickness of around 30 µm to 200 µm, T-die extrusion molding is suitable which has large flexibility for adjusting production conditions such as resin discharge quantity, lip width, and take-up speed. When forming a flame-retardant layer 11 having a thickness exceeding 200 µm, calendar molding is suitable because it is easy to increase resin discharge quantity and has high productivity.

Use of T-die extrusion molding can form a thin flame-retardant layer 11 to thereby form a flame-retardant polyolefin-based reinforced sheet 10 with a reduced weight. As a consequence, workability of the reinforced sheet 10 is improved and workload is reduced. The thickness of the flame-retardant layer 11 is preferably 30 µm or more and 200 µm or less.

The flame-retardant layer 11 may be stretched. The stretching ratio is preferably 0.5 times or more and 5 times or less. Even if the flame-retardant layer 11 is stretched, when it is ignited, thermal contraction occurs due to release of the residual stress when the flame-retardant layer 11 melts, thereby allowing the flame-retardant layer 11 to move away from the fire source, and simultaneously allowing the residual flame in the molten portions to self-extinguish due to the effect of the thermal contraction.

The flame-retardant layer 11 and the reinforcement layer 12 may be bonded to each other using an adhesive, or the flame-retardant layer 11 may be welded to the reinforcement layer 12 without using an adhesive. It is preferable that the flame-retardant layer 11 and the reinforcement layer 12 are laminated with each other using lamination such as extrusion lamination or hot melt lamination.

The flame-retardant polyolefin-based reinforced sheet 10 may have a printable surface. At least one of the two surfaces of the reinforced sheet 10 may be printable.

Specifically, the flame-retardant polyolefin-based reinforced sheet 10 may have a reception layer as a front layer. The surface of the reception layer may be a printable outermost surface of the reinforced sheet 10.

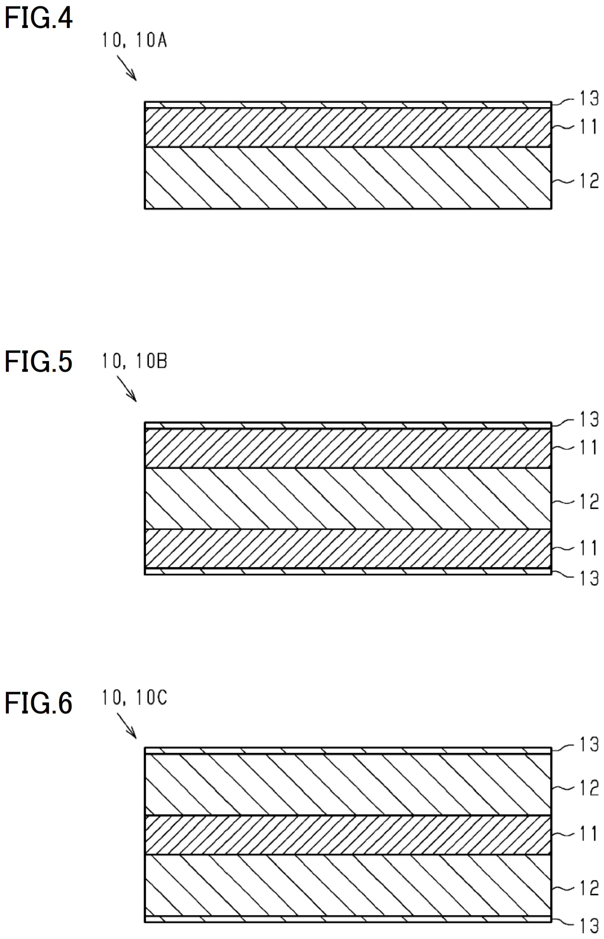

Fig. 4 shows a mode in which the reinforced sheet 10A as the first example includes a reception layer 13. The reception layer 13 is laminated on the flame-retardant layer 11. In the example shown in Fig. 4, one of the two surfaces of the reinforced sheet 10A is printable. Fig. 5 shows a mode in which the reinforced sheet 10B as the second example includes such reception layers 13, and Fig. 6 shows a mode in which the reinforced sheet 10C as the third example includes such reception layers 13. In the examples shown in Figs. 5 and 6, the reinforced sheets 10B and 10C are each provided with reception layers 13 on the front and rear surfaces thereof so that both of these surfaces are printable.

The reception layer 13 contains an anchoring agent enhancing adhesion of the printing ink to the polyolefin-based resin. Examples of the anchoring agent include acrylic resins and urethane-based resins.

In the reinforced sheet 10, the flame-retardant layer 11 or the like, as an underlying layer on which the reception layer 13 is laminated, may undergo surface treatment such as corona discharge treatment, chromic acid oxidation treatment (wet), flame treatment, hot air treatment, ozone plasma irradiation treatment, and adhesion-enhancement treatment.

These surface treatments enhance wettability of the surface of the underlying layer for the coating liquid for forming the reception layer 13, thereby enhancing adhesion of the reception layer 13 to the underlying layer. The method of surface treatment may be selected according to the type of the underlying layer, but from the perspective of adhesion effect with the reception layer 13 and operability of the processing device, corona discharge treatment or ozone plasma irradiation treatment is preferably used.

An anchor layer or primer layer may be formed between the underlying layer and the reception layer 13 to enhance adhesion of the reception layer 13 to the underlying layer. The material of the anchor layer or primer layer may be appropriately selected; however if an aqueous material, such as an alcohol-based material having high surface tension, is used, the surface tension is preferably increased to approximately 50 dyn/cm. If a material, such as a solvent-based or urethane-based material, having low surface tension is used, coating suitability may be achieved even with a surface tension of approximately 45 dyn/cm.

For applications with an extremely short usage period, printing may be provided to the surface of the reinforced sheet 10 including no reception layer 13. If the reinforced sheet 10 is used as a protective material, the reinforced sheet 10 does not have to include the reception layer 13, and printing does not have to be provided to the reinforced sheet 10.

### [Properties of flame-retardant polyolefin-based reinforced sheet]

If the flame-retardant polyolefin-based reinforced sheet 10 as a whole undergoes material recycling, the recycled resin obtained from the recycling has a melt flow rate (MFR) of 10 g/10 min or more and 50 g/10 min or less.

In the material recycling, the reinforced sheet 10 is crushed and melted and then formed into pellets, etc. to obtain a recycled resin.

The MFR of the recycled resin is measured according to JIS K 7210-1:2014 (ISO 1133-1:2011). The temperature condition is set to 230°C and the load is set to 2.16 kg. The recycled resin, if it has an MFR in the above range, may have good processing suitability for highly versatile processing methods such as injection molding and extrusion molding. Since these processing methods can be used for the processing of the recycled resin, application flexibility of the recycled resin is also enhanced.

The MFR of the recycled resin can be controlled by adjusting the MFRs of the constituent layers of the flame-retardant polyolefin-based reinforced sheet 10. The proportion of the reception layer 13 relative to the flame-retardant polyolefin-based reinforced sheet 10 is approximately 2 mass% at most, and therefore the effect of the reception layer 13 on the MFR of the recycled resin is extremely small.

The constituent layers of the flame-retardant polyolefin-based reinforced sheet 10 will be described in detail.

### [Flame-retardant layer]

The flame-retardant layer 11 contains a polyolefin-based resin and a flame retardant. The flame-retardant layer 11 preferably further contains a white pigment and various additives. Details of each material and physical properties of the flame-retardant layer 11 will be described.

### (Polyolefin-based resin)

Examples of the polyolefin-based resin include a syndiotactic polypropylene, isotactic polypropylene, atactic polypropylene, homopolypropylene, random polypropylene, block polypropylene, ethylene-α-olefin copolymer, low-density polyethylene, medium-density polyethylene, high-density polyethylene, ethylene-vinyl acetate copolymer, ethylene-acrylic acid copolymer, ethylene-acrylic acid ester copolymer, ethylene-methacrylic acid copolymer, ethylene-methacrylic acid ester copolymer, ethylene-methyl methacrylic acid copolymer, ethylene-methyl methacrylic acid ester copolymer, ethylene-ethyl acrylic acid copolymer, and ethylene-ethyl acrylic acid ester copolymer. The polyolefin-based resin contained in the flame-retardant layer 11 may be one type of resin, or may be two or more types of resins.

The polyolefin-based resin may be produced using a radical or ionic polymerization method. The polyethylene-based resin produced using a radical polymerization method encompasses an ethylene homopolymer and a copolymer of ethylene and a monomer radically polymerizable with the ethylene.

As the polyolefin-based resin, a polyethylene resin is preferably used. If the flame-retardant layer 11 is formed using calendar molding, the lamination temperature for the reinforcement layer 12 becomes low, and therefore the proportion of the polyethylene resin in the flame-retardant layer 11 is increased to increase the adhesion strength of the flame-retardant layer 11 for the reinforcement layer 12 by the lamination.

The polyolefin-based resin may contain a biomass resin. Examples of the biomass resin include a biomass polyethylene resin and biomass polypropylene resin. The biomass resin is produced using a renewable biological resource, such as a plant, as a raw material. For example, a biomass resin may be produced by polymerizing a plant-derived monomer. Any known method may be used for producing the biomass resin. If the polyolefin-based resin contains a biomass resin, a flame-retardant polyolefin-based reinforced sheet 10 contributing to carbon neutrality can be achieved.

The polyolefin-based resin can contain both a fossil fuel-derived resin and a biomass resin. For example, the polyolefin-based resin may contain a fossil fuel-derived polypropylene resin and a biomass polyethylene resin. The proportion of the biomass resin in the polyolefin-based resin may be preferably, for example, less than 50 mass%. Such a configuration can contribute to carbon neutrality, while maintaining favorable properties of the flame-retardant layer 11.

The proportion of the biologically derived materials in the polyolefin-based resin, i.e., biomass ratio, can be calculated by measuring radiocarbon (C14) in the polyolefin-based resin. Carbon dioxide in the atmosphere contains C14 at a fixed proportion (105.5 pMC), and therefore plants that grow absorbing carbon dioxide in the atmosphere also have C14 concentration of approximately 105.5 pMC. However, fossil fuels contain almost no C14.

Therefore, the biomass ratio can be calculated by calculating the proportion of C14 contained in all the carbon atoms in the polyolefin-based resin. A biomass ratio Pbio (%) can be calculated from the following Formula (1), with the C14 concentration in the polyolefin-based resin represented by Pc(pMC). $Pbio = \left(Pc/105.5\right) \times 100$ (1)

If all the polyolefin-based resin contained in the flame-retardant layer 11 is a biologically derived resin, the biomass ratio is theoretically 100%. If all the polyolefin-based resin is a fossil fuel-derived resin, the biomass ratio is theoretically 0%. Based on this, the content of the biomass resin in the polyolefin-based resin can be confirmed by measuring C14 in the resin composition constituting the flame-retardant layer 11.

### (Flame retardant)

The flame retardant is preferably a combination of a bromine-based compound and an inorganic compound.

The bromine-based compound may include either or both of a drip type flame retardant and a non-drip type flame retardant. The drip type suppresses combustion by dropping droplets. The non-drip type suppresses combustion by acting on the gas phase and diluting and blocking oxygen by trapping OH radicals or generating non-flammable gases. As in the case of forming the flame-retardant layer 11 using T-die extrusion molding, if the flame-retardant layer 11 is produced at high temperatures, the non-drip type flame retardant is preferably used because the drip type flame retardant is decomposed. If a pellet-shaped recycled resin is produced using extrusion molding in the recycling processing, decomposition of the drip type flame retardant also occurs. Accordingly, a high-quality recycled resin can be obtained by using the non-drip type flame retardant.

Examples of the inorganic compound include antimony oxide compounds such as antimony trioxide and antimony pentoxide; hydrated metal compounds such as magnesium hydroxide and aluminum hydroxide; and zinc borate. It is particularly preferable to use antimony oxide compounds. By using an antimony oxide compound in combination with a bromine-based compound, antimony-containing heavy non-flammable gases are generated when ignited, thereby synergistically enhancing the oxygen-diluting effect and the oxygen-blocking effect.

In order to maintain flame retardancy, the flame retardant contained in the flame-retardant layer 11 is preferably 7 or more by mass ratio when the mass of the polyolefin-based resin is 100. In order to suppress an excessively high MFR of the resin composition used for forming the flame-retardant layer 11, the flame retardant contained in the flame-retardant layer 11 is preferably 30 or less by mass ratio when the mass of the polyolefin-based resin is 100.

### (White pigment)

When the flame-retardant polyolefin-based reinforced sheet 10 is used as a decorative material in particular, it is an important issue to suppress yellowing and other color changes caused by UV light.

If the flame-retardant layer 11 is formed using T-die extrusion molding as described above, the flame-retardant layer 11 becomes thin, and therefore the color of the reinforcement layer 12 overlapped with the flame-retardant layer 11 tends to be visible in the reinforced sheets 10 of the first and second examples. Therefore, the flame-retardant layer 11 preferably has enhanced light-shielding properties and whiteness.

Accordingly, for the purpose of enhancing whiteness of the flame-retardant layer 11 to shield light, the flame-retardant layer 11 preferably contains a white pigment. Examples of the white pigment include titanium oxide and barium sulfate. In particular, titanium oxide is preferably used because of having small particle size and a high concealment effect.

Titanium oxide mainly used for industrial applications include two types, rutile and anatase. Of these types, the rutile type is preferably used because of having high refractive index. Specifically, the rutile type titanium oxide (rutile stone) has a refractive index of 2.72, while the anatase type titanium oxide (anatase stone) has a refractive index of 2.52. The main factor of defining the optical properties of inorganic pigments is the refractive index. The greater the refractive index is, the greater the surface reflection becomes, and thus the greater the light scattering becomes in the resin, tending to increase the concealment ability. Therefore, use of titanium oxide having a higher refractive index can reduce yellowing of the resin caused by UV light.

Titanium oxide strongly absorbs light having a wavelength shorter than 400 nm, while not absorbing visible light. Therefore, since effects similar to those of light stabilizers or UV absorbers are exhibited, containing titanium oxide can reduce the content of these additives.

Also, due to having a photocatalytic effect, titanium oxide exerts a strong oxidizing effect on its surface when exposed to light. This property is utilized industrially for decomposing persistent substances; however, if the oxidizing effect is exerted in the resin or on the surface layer of the flame-retardant polyolefin-based reinforced sheet 10, this may lead to deterioration of the resin and the quality of the printed surface. Therefore, titanium oxide is preferably used after undergoing surface treatment and suppressing the oxidizing effect. Examples of surface treatment agents/dispersants include silica, aluminum hydroxide, dimethicone, cyclopentasiloxane, triethoxycaprylylsilane, hydrogen dimethicone, isostearic acid, stearic acid, alumina, and sodium polyacrylate.

Inorganic fillers have an effect of enhancing light-shielding properties, and thus antimony compounds, magnesium hydroxide, aluminum hydroxide, etc. used as flame retardants also have an effect of improving light-shielding properties and whiteness.

In order to reliably achieve the light shielding and whitening effects, the functional components for light shielding and whitening contained in the flame-retardant layer 11 are preferably 10 or more by mass ratio when the mass of the polyolefin-based resin is 100. Also, the above functional components contained in the flame-retardant layer 11 are preferably 30 or less by mass ratio when the mass of the polyolefin-based resin is 100. If the mass ratio of the functional components is 30 or less, the inorganic filler content does not become excessively large, and therefore progress of resin deterioration due to shear heating is suppressed in the production processes of the flame-retardant layer 11. Also, since excessively high specific gravity can be avoided, deterioration is also suppressed in processing suitability for T-die extrusion molding.

### (Additives)

For example, the additives may have functions of enhancing processing stability, weather resistance, strength, etc. Examples of the additives include lubricants, antioxidants, light stabilizers, antistatic agents, and UV absorbers.

If the content of a hydrated metal compound as a flame retardant is large, resin deterioration due to shear heating may easily progress in the production processes of the flame-retardant layer 11. Accordingly, it is preferable to add a lubricant. Addition of a lubricant to the resin composition used for forming a flame-retardant layer 11 can reduce friction between the resin and the molding machine or friction between particles of the resin. For example, hydrocarbon-based, fatty acid-based, aliphatic alcohol-based, aliphatic amide-based, metal soap-based lubricants, and other lubricants may be used. Considering balance between external lubricity and internal lubricity, it is preferable to use multiple lubricants in combination.

In order to suppress resin deterioration due to shear heating or improve weather resistance assuming outdoor use, it is preferable to add an antioxidant. The antioxidant includes primary antioxidants as radical scavengers and secondary antioxidants as peroxide decomposers.

As primary antioxidants, phenolic antioxidants are generally used. Phenolic antioxidants have a function of stabilizing alkoxy radicals formed from oxygen and radicals produced by UV light or thermal energy. Phenolic antioxidants include three types, i.e., hindered type, semi-hindered type, and less-hindered type, with different chemical structures, and with different numbers of scavenged radicals and reaction rates. In general, polyolefin-based resins have relatively high stability and are slow in the progress of oxidation reaction, and therefore mildly-acting hindered type antioxidants are effective. Typical commercially available phenolic antioxidants include the Irganox series manufactured by BASF and the AO series manufactured by ADEKA.

As the secondary antioxidants, sulfur-based and phosphorus-based antioxidants are used. These antioxidants decompose hydroperoxide (ROOH), which has been produced as a reaction product of radical scavenging performed by the phenolic antioxidants, into a stable material to suppress progress of oxidization due to generation of radicals from the hydroperoxide in chain reaction.

However, sulfur-based antioxidants produce odors at high temperatures and are difficult to color, and therefore when producing a white color-based reinforced sheet 10, phosphorus-based antioxidants are preferably used. Typical commercially available phosphorus-based antioxidants include Irgafos 168 manufactured by BASF and 2112 of the PEP series manufactured by ADEKA.

In order to suppress resin deterioration due to the flame-retardant layer 11 being exposed to UV light, it is preferable to add a UV absorber.

Examples of the UV absorber include benzotriazole-based and benzophenone-based UV absorbers. These UV absorbers absorb UV light having a wavelength in the range of approximately 320 nm to 350 nm at which the resin is most susceptible.

Higher light stability can be achieved by using a hindered amine light stabilizer (HALS) in combination with a UV absorber. HALSs have a function of scavenging radicals produced by UV light and exhibit the effect of preventing coloring and maintaining gloss. When used in combination with a bromine-based compound that is a flame retardant, a trace amount of acidic substances is produced in the resin composition by the action of the bromine-based compound; however, if the HALS is alkaline, neutralization occurs to antagonize the reaction. Therefore, it is preferable to use a NOR type HALS which is less likely to form salts with acidic substances.

Typical commercially available UV absorbers include the Tinuvin series and Uvinul series manufactured by BASF. The Tinuvin series contain HALSs. Typical commercially available HALSs include the LA series manufactured by ADEKA.

### (Mixing ratio of materials)

The flame-retardant layer 11 preferably contains, by mass ratio, 40% or more and 80% or less of a polyolefin-based resin, 10% or more and 20% or less of a bromine-based compound, and 3% or more and 20% or less of a white pigment relative to the total mass of the flame-retardant layer 11.

In order to achieve good physical properties for the recycled resin, the ratio of the polyolefin-based resin in the flame-retardant layer 11 is preferably 50 mass% or more. However, even if the ratio of the polyolefin-based resin is less than 50 mass%, it is entirely possible to use the recycled resin as a material for products formed by injection molding or the like.

### (MFR)

The MFR at 230°C with a load of 2.16 kg for the resin composition used for forming the flame-retardant layer 11 is preferably 8 g/10 min or more and 30 g/10 min or less.

As described above, T-die extrusion molding is preferably used to reduce the weight of the flame-retardant polyolefin-based reinforced sheet 10. If the MFR of the resin composition is 8 g/10 min or more and 30 g/10 min or less, high suitability for T-die extrusion molding can be achieved.

If the MFR of the resin composition is as low as approximately 0.5 g/10 min to 7 g/10 min, fluidity of the resin is excessively small and it may be difficult to increase the injection quantity with the extrusion molding machine, reducing productivity. Fluidity in the molding machine can be increased by raising the resin temperature; however, it may be difficult to significantly improve fluidity, and when the injection quantity is increased, a pulsating phenomenon called draw resonance may occur, making it difficult to achieve stable production. The draw resonance may be improved by further increasing the resin temperature; however, excessively high resin temperature may raise the issues of: deterioration of the resin due to thermal history; melting or thermal contraction of the reinforcement layer 12 during lamination of the flame-retardant layer 11 onto the reinforcement layer 12; and occurrence of blocking due to insufficient cooling during and after the recovery process of the produced sheet. If the MFR of the resin composition is 8 g/10 min or more, occurrence of these issues can be suppressed.

On the other hand, if the MFR of the resin composition exceeds 30 g/10 min, fluidity may be significantly improved; however, a resin with a low average molecular weight has to be used in order to increase the MFR to higher than 30 g/10 min. If a resin with a low average molecular weight is used, holes are likely to be formed when forming the flame-retardant layer 11, significantly lowering moldability. If the MFR of the resin composition is 30 g/10 min or less, occurrence of such an issue can be suppressed.

If the MFR of the resin composition is 8 g/10 min or more and 30 g/10 min or less, the MFR of the recycled resin of the flame-retardant polyolefin-based reinforced sheet 10 can be easily controlled to 10 g/10 min or more and 50 g/10 min or less.

In order to obtain a desired MFR for the resin composition, it is preferable to use a polyolefin-based resin whose MFR is smaller than the desired MFR by approximately 5 g/10 min to 10 g/10 min. Thus, even if the MFR increases due to containing the flame retardant, the MFR of the resin composition can be easily controlled to the desired value of 30 g/10min or less.

### [Reinforcement layer]

### (Polyolefin-based fibers)

The material of the polyolefin-based fibers constituting the reinforcement layer 12 may be a polyethylene or polypropylene. An example configuration of polypropylene fibers will be described below.

A known resin is used for the polypropylene resin constituting the fibers. The polypropylene resin may be any polymer obtained from a monomer having a propylene as a main component. For example, the polypropylene resin may be a propylene homopolymer, or may be a copolymer of a propylene with other one or more comonomers. Examples of the comonomers include olefin hydrocarbons such as ethylene and 1-butene.

Specific examples of the copolymer include propylene-ethylene-α-olefin random copolymers such as a propylene-ethylene random copolymer and propylene-ethylene-1-butene copolymer, and propylene-α-olefin random copolymers such as a propylene-1-butene copolymer, propylene-1-pentene copolymer, propylene-1-hexene copolymer, and propylene-1-octene copolymer. The α-olefin used for copolymerization preferably has 4 to 10 carbon atoms.

The polypropylene resin constituting the fibers may be one resin or may be a mixture of two or more resins. For example, the polypropylene resin may be a mixture of polypropylene homopolymers having different average molecular weights, or may be a mixture of a propylene homopolymer and a random copolymer exemplified above. For example, the polypropylene resin may be a mixture of a propylene homopolymer and a low crystalline or amorphous propylene-ethylene random copolymer.

If a homopolymer polypropylene resin is used, an isotactic polymer is commonly used; however, it is acceptable to use a syndiotactic or atactic polymer, or that these polymers are contained in the resin constituting the fibers.

As in the case where a flame-retardant polyolefin-based reinforced sheet 10 is used as a decorative material, if printing is provided to the surface of the reinforced sheet 10, a concealing pigment may be added to the fiber material resin in order to minimize visibility via the sheet. Examples of the pigment include black pigments, white pigments, and opaque pigments. For example, if a black pigment is used, approximately 3 mass% of the black pigment may be added to the polyolefin-based resin, so that sufficient light-shielding properties are obtained in the reinforcement layer 12 constituted of the fibers which are made of the resin material.

A dry-heat dimensional change ratio of the polyolefin-based fibers at 150°C is preferably in the range of -5% to -50%. The dry-heat dimensional change ratio is measured according to the JIS L 1013 B method. Duration of the heat treatment is 30 minutes. If the dry-heat dimensional change ratio is in the above range, when ignited, the polyolefin fibers undergo thermal contraction, thereby allowing the reinforcement layer 12 to move away from the fire source, and simultaneously allowing the residual flame in the molten portions to self-extinguish.

### (Method of producing fibers)

The polyolefin-based fibers constituting the reinforcement layer 12 may be a multifilament or flat yarn.

The multifilament is produced using a melt spinning method. Specifically, a molten resin is extruded from a spinning nozzle and cooled to obtain an unstretched yarn. The unstretched yarn is reheated and stretched to obtain a stretched yarn. The multifilament is constituted of such stretched yarns. The stretching ratio is approximately 3 to 10 times.

The flat yarn is obtained by molding a molten resin into a film using T-die extrusion molding, inflation molding, or the like, cutting the film into strips, and stretching the strips. The stretching ratio is preferably 3 times or more and 15 times or less, and more preferably 5 times or more and 10 times or less. Thus, sufficient strength can be achieved. In order to suppress unevenness in stretching, the stretching is preferably performed in multiple stages.

The flat yarn is finely shredded to obtain split yarns. The flat yarn is a thick yarn in a flat band shape. By shredding the flat yarn, thin yarns like those of a multifilament can be obtained.

The thickness of the polyolefin-based fibers is not particularly limited, but if a multifilament is used and the yarns are excessively thin, the yarns may be melted due to frictional heat in the weaving process, and this may reduce productivity. Therefore, the thickness of the polyolefin-based fibers is preferably 100 denier or more, and the filament count in a multifilament is preferably 48 or more.

The polyolefin-based fibers may be a filament twisted yarn (FTY) or draw textured yarn (DTY).

For the resin constituting the polyolefin-based fibers of the reinforcement layer 12, the MFR at 230°C with a load of 2.16 kg is preferably 20 g/10 min or more and 50 g/10 min or less. In general, the resin used for constituting the polyolefin-based fibers is a resin having an MFR suitable for the production method of the fibers, applications of the fibers, or desired functions of the fibers. For example, there may be fibers made of a resin whose MFR is approximately 5 g/10 min, or there may be fibers made of a resin whose MFR exceeds 50 g/10 min. By varying physical properties of resins, polyolefin-based fibers can exhibit various functions, and thus substrates constituted of polyolefin fibers can be used in various applications.

As an example, Table 1 shows properties of polyolefin-based fibers according to applications. The properties of the yarn in each of these applications are described in the book "Easy Basic Knowledge of Industrial Fibers" published by Nikkan Kogyo Shimbun, Ltd.

**[Table 1]**

| | Properties | Strength (cN/dtex) | Extensibility | Melting point (°C) |
|---|---|---|---|---|
| Civil engineering reinforcement material (Geotextile, etc.) | Thermal adhesion | 2.5 | 100 | 130 |
| High-shrinkage material (Shrinkage: 30% or more) | High shrinkage | 1.7 | 40 | 107 |
| Floor covering | High extensibility | 1.9 | 230 | 170 |
| Tufted carpet | | 3.4 | 80 | 170 |
| Fleece, geotextile | High strength | 5.5 | 30 | 170 |

Thus, the properties of polyolefin-based fibers depend on the physical properties of the resins. For the polyolefin-based fibers of the reinforcement layer 12, it is preferable to use a resin that can enhance the reinforcement function of the reinforcement layer 12, or in other words, a resin that can enhance the strength of the fibers. The strength can be enhanced by using a resin having a large average molecular weight, i.e., a resin having a low MFR. However, if the MFR is excessively low, moldability may be deteriorated to reduce the productivity of the yarn. From this perspective, the fibers of the reinforcement layer 12 are preferably made of a resin having an MFR of 20 g/10 min or more and 50 g/10 min or less.

Resins having MFRs in this range are suitable for producing yarns using a melt spinning method. Accordingly, the polyolefin-based fibers constituting the reinforcement layer 12 are preferably a multifilament.

If the resin of the reinforcement layer 12 has an MFR in the above range, the MFR of the recycled resin of the flame-retardant polyolefin-based reinforced sheet 10 can be easily controlled to 10 g/10 min or more and 50 g/10 min or less.

### (Method of producing reinforcement layer)

The reinforcement layer 12 may be a woven fabric, knitted fabric, or nonwoven fabric.

The woven fabric has a structure in which the warp and weft threads cross at right angles, and is produced by interlacing weft threads with parallelly arranged warp threads according to given rules. Examples of the fabric weave structure, i.e., the interlacing mode of the warp and weft threads, include plain weave, twill weave, sateen weave, silk weave, imitation gauze weave, and leno weave.

The fabric strength and texture depend on the number of warp and weft threads or the weave structure; however, these are not particularly limited in the present embodiment. For example, the warp and weft densities may each be 5/2.54 cm or more and 40/2.54 cm or less, and preferably 10/2.54 cm or more and 30/2.54 cm or less. A commercially available woven fabric may, for example, be Tarpee Cloth (manufactured by Hagihara Industries Inc.).

Examples of the knitted fabric include Russell knit, tricot knit, and Milanese knit.

The reinforcement layer 12 may be a mesh nonwoven fabric. The mesh nonwoven fabric has a structure in which layers each including flat yarns arranged in parallel are overlapped with each other so that the parallel directions intersect at right angles, with these layers heat-fused. Typical commercially available examples of the mesh nonwoven fabric include Warif (registered trademark, manufactured by JX ANCI), CLAF (registered trademark, manufactured by JX ANCI), and Sof (manufactured by Sekisui Film Co., Ltd.).

### [Difference in physical properties between flame-retardant layer and reinforcement layer]

In the recycled resin of the flame-retardant polyolefin-based reinforced sheet 10, the resin of the flame-retardant layer 11 and the resin of the reinforcement layer 12 are mixed together. Therefore, in order to obtain a recycled resin having good properties, it is necessary to consider the balance of the physical properties between the resins forming the flame-retardant layer 11 and the reinforcement layer 12.

Specifically, it is preferable to use a polypropylene resin that is a homopolymer having an isotactic structure for the reinforcement layer 12 from the perspective of strength and rigidity; however, the resin obtained by recycling the reinforcement layer 12 reflects the characteristics of the homopolymer. Consequently, the recycled resin of the reinforcement layer 12 is characterized by a high flexural modulus and rigidity, while having low impact strength.

Therefore, it is preferable to use a random polymer polypropylene resin for the flame-retardant layer 11. A random polymer polypropylene resin has a structure in which a small amount of comonomer such as an ethylene is randomly incorporated into the propylene chain. This may break the regular propylene chain to reduce crystallinity of the polymer; however, impact resistance may be improved because the polymer becomes soft and viscous.

Accordingly, use of a random polymer as a resin for the flame-retardant layer 11 can compensate impact strength in the recycled resin of the flame-retardant polyolefin-based reinforced sheet 10, achieving good impact resistance.

Thus, in order to obtain a recycled resin having good properties, a resin that is softer, more stretchable, and more viscous than the resin forming the reinforcement layer 12 is preferably used as a resin for forming the flame-retardant layer 11. Specifically, the resin composition constituting the flame-retardant layer 11 preferably has a low flexural modulus, large nominal tensile strain at break, and high Charpy impact strength compared to the resin constituting the polyolefin fibers of the reinforcement layer 12. Also, the MFR of the resin composition forming the flame-retardant layer 11 is preferably lower than that of the resin forming the reinforcement layer 12.

Thus, a reinforcement function of the reinforced sheet 10 can be reliably obtained in the reinforcement layer 12, while on the other hand, the recycled resin can avoid having uneven properties, thereby obtaining a recycled resin that can be used in a wide range of applications. In other words, good properties can be obtained in both the reinforced sheet 10 and the recycled resin.

### [Examples]

The flame-retardant polyolefin-based reinforced sheet described above will be explained using specific examples and comparative examples.

### (Configuration of flame-retardant polyolefin-based reinforced sheet of Example 1)

### <Production method>

The following materials were mixed together to prepare a resin composition used for forming flame-retardant layers.

### Polyolefin-based resin:

| | |
|---|---|
| Polypropylene resin (random polymer) | 100 parts by mass |
| Flame retardant: Bromine compound | 11 to 21 parts by mass |
| Antimony oxide compound | 3 to 7 parts by mass |
| White pigment: Titanium oxide | 10 to 11 parts by mass |
| Additive: Antioxidant, HALS, UVA, lubricant, etc. | 0 to 2 parts by mass |

By performing T-die extrusion molding and lamination, two flame-retardant layers made of the above resin composition were laminated on a reinforcement layer to obtain a laminate in which the reinforcement layer was sandwiched between the two flame-retardant layers. The flame-retardant layers each had a thickness of 80 µm. As the reinforcement layer, a plain weave fabric formed of multifilament yarns was used. The multifilament yarns were polypropylene fibers made of a homopolymer having an isotactic structure.

Both surfaces of the laminate were subjected to corona discharge treatment to enhance the surface wettability to approximately 48 dyn/cm Using gravure printing, a urethane-based anchoring agent was applied to the surfaces that had undergone corona discharge treatment, and then the coating films were dried and solidified to form reception layers. The coating films were each formed to have a thickness such that the solid content of the anchoring agent was approximately 4.0 g/m². Thus, a flame-retardant polyolefin-based reinforced sheet of Example 1 was obtained.

### <Dry-heat dimensional change ratio of reinforcement layer fibers>

For the propylene fibers constituting the reinforcement layer of Example 1, shrinkage during heating was measured according to the JIS L 1013 B method. The results are shown in Table 2. In Condition 1, the treatment temperature was 120°C and the treatment time was 30 minutes. In Condition 2, the treatment temperature was 150°C and the treatment time was 30 minutes.

**[Table 2]**

| | Shrinkage (%) | |
|---|---|---|
| | Condition 1 | Condition 2 |
| White yarn | -6.4 | -33.8 |
| Black yarn | -6.5 | -33.2 |

As shown in Table 2, the polypropylene fibers were confirmed to shrink by heat. As a result of using a reinforcement layer formed of such fibers, when the flame-retardant polyolefin-based reinforced sheet is ignited, it exhibits behavior of moving away from the fire source by the thermal contraction occurred therein and at the same time allows the residual flame in the molten portions to self-extinguish.

### [Comparison of physical properties between flame-retardant layer and reinforcement layer]

For the resin composition used for forming the flame-retardant layers of Example 1 and for the resin obtained as a result of recycling the reinforcement layer, measurements were performed in terms of MFR, tensile yield stress, tensile fracture stress, nominal tensile strain at break, flexural strength, flexural modulus, and Charpy impact strength.

MFR was measured according to ISO 1133 at 230°C with a load of 2.16 kg. Tensile yield stress, tensile fracture stress, and nominal tensile strain at break were measured according to ISO 527-1 at a tensile speed of 50 mm/min. Flexural strength and flexural modulus were measured according to ISO 178. Charpy impact strength was measured according to ISO 179 using a notched specimen. The measurement results of these physical properties are shown in Table 3.

**[Table 3]**

| | Flame-retardant layer | Reinforcement layer |
|---|---|---|
| MFR (g/10 min) | 12.41 | 39.64 |
| Tensile yield stress (MPa) | 6.8 | 32.1 |
| Tensile fracture stress (MPa) | Not fractured | 10.9 |
| Nominal tensile strain at break (%) | 435 or more | 232 |
| Flexural strength (MPa) | 6.9 | 40.8 |
| Flexural modulus (MPa) | 155 | 1,396 |
| Charpy impact strength (kJ/m²) | 55.76 | 1.91 |

As shown in Table 3, it can be said that the resin composition of the flame-retardant layers is softer than the recycled resin of the reinforcement layer because of having a lower MFR and flexural modulus. Also, it can be said that the resin composition of the flame-retardant layers is easier to stretch than the recycled resin of the reinforcement layer because of having a larger nominal tensile strain at break of 435% or more. Also, it can be said that the resin composition of the flame-retardant layers is more viscous than the recycled resin of the reinforcement layer because of having a larger Charpy impact strength.

### (Physical properties of flame-retardant polyolefin-based reinforced sheet)

For the flame-retardant polyolefin-based reinforced sheets of Example 1 and Comparative Example, measurements were performed in terms of mass, thickness, tensile strength, and tear strength. For the flame-retardant polyolefin-based reinforced sheet of Comparative Example, the flame-retardant layers were prepared using calendar molding. Since viscosity of the resin is important in calendar molding, the flame-retardant layers of Comparative Example were formed using a resin composition having a lower MFR than that of Example 1.

Mass was measured according to JIS L 1096 8.3.2. Thickness was measured according to JIS L 1096 8.4. Tensile strength was measured according to the JIS L 1096 8.14.1 A method (strip method), setting the specimen width to 30 mm. Tear strength was measured according to the JIS L 1096 8.17.4 D method (pendulum method). The measurement results of these physical properties are shown in Table 4.

**[Table 4]**

| | | Example 1 | Comparative Example |
|---|---|---|---|
| Mass (g/m) | | 285.63 | 610.90 |
| Thickness (mm) | | 0.458 | 0.650 |
| Tensile strength (N) | Longitudinal | 928.20 | 1,000 or higher |
| | Transverse | 1,000 or higher | 1,000 or higher |
| Tear strength (N) | Longitudinal | 64 or higher | 64 or higher |
| | Transverse | 64 or higher | 64 or higher |

As shown in Table 4, the flame-retardant polyolefin-based reinforced sheet of Example 1 has a smaller thickness that that of Comparative Example and has a mass of 50% or less. This is the result of forming a thin flame-retardant layer using extrusion molding. As shown in Table 3, the resin composition of the flame-retardant layers having an MFR of 8 g/10 min or more and 30 g/10 min or less enables use of such a molding method and achievement of the thickness.

In Example 1, tensile strength has been slightly reduced compared to Comparative Example due to the reduced thickness; however, sufficient strength has been ensured for practical use.

### (Evaluation of flame retardancy)

The flame-retardant polyolefin-based reinforced sheet of Example 1 was subjected to fire-resistance testing using the 45° micro-burner method specified in the Ministry of Internal Affairs and Communications Ordinance on fire-resistance performance testing method. In the preprocessing, the reinforced sheet was immersed in 50°C warm water for 30 minutes. The results of the testing are shown in Table 5. In this testing method, the 1-minute heating test requires evaluation of three samples, and 3-second heating test after ignition requires evaluation of two samples. Samples 1 to 3 used for the 1-minute heating test are different from Samples 1 and 2 used for the 3-second heating test after ignition.

**[Table 5]**

| Evaluation item | | Example 1 | | |
|---|---|---|---|---|
| | | Sample 1 | Sample 2 | Sample 3 |
| 1-minute heating | Residual flame duration (sec.) | 0.0 | 0.0 | 0.0 |
| | Afterglow duration (sec.) | 0.0 | 0.0 | 0.0 |
| | Carbonized area (cm²) | 7.4 | 6.7 | 7.5 |
| 3-second heating after ignition | Residual flame duration (sec.) | 0.0 | 0.0 | - |
| | Afterglow duration (sec.) | 0.0 | 0.0 | - |
| | Carbonized area (cm²) | 5.2 | 5.1 | - |

As shown in Table 5, the flame-retardant polyolefin-based reinforced sheet of Example 1 exhibited good fire resistance. Accordingly, it was confirmed that the flame-retardant polyolefin-based reinforced sheet of Example 1 had sufficient flame retardancy.

### (Evaluation of printing suitability)

For the flame-retardant polyolefin-based reinforced sheet of Example 1, patterns were printed on the surfaces of the reception layers using a UV inkjet printer. After that, coating adhesion and rub fastness were evaluated as evaluation of printing suitability. Coating adhesion was evaluated according to JIS K 5600-5-6 (cross-cut method) with the cutting interval set to 2 mm. Rub fastness was evaluated according to JIS L 0849 by observing color staining of the rubbing fabric and appearance of the rubbed object. The evaluation results are shown in Table 6.

**[Table 6]**

| | Example 1 | | |
|---|---|---|---|
| | Sample 1 | Sample 2 | Sample 3 |
| Coating adhesion | Classification 1 | Classification 1 | Classification 1 |
| Rub fastness | Grades 4-5 | Grades 4-5 | Grades 4-5 |

As shown in Table 6, coating adhesion was evaluated to be Classification 1, i.e., small peelings were observed at the intersections of cuts in the printed coating, but portions affected in the cross-cut regions were 5% or less. Rub fastness was evaluated to be approximately Grades 4-5 in judgment using a contamination gray scale.

Accordingly, it was confirmed that the flame-retardant polyolefin-based reinforced sheet of Example 1, in which the printed coating material was less likely to peel, had good printing suitability.

### (Evaluation of recyclability)

### <Physical properties of recycled resin>

For the flame-retardant polyolefin-based reinforced sheet of Example 1, patterns were printed on the surfaces of the reception layers using a UV inkjet printer. This reinforced sheet was subjected to material recycling to obtain a recycled resin. For material recycling, the following three Methods A to C were used to obtain recycled resins in the respective methods.

Method A: Using a waste plastic volume reduction machine (manufactured by Meinou), a volume-reduced flake material was produced from the reinforced sheet, and the volume-reduced flake material was pelletized using a single screw extruder, thereby obtaining a recycled resin. The processing temperature of the volume reduction machine was 200°C. The processing temperature of the single screw extruder was 200°C and impurities were removed using an 80 mesh.

Method B: Using an integrated recycling processing machine (manufactured by Yei Machinery Factory Co.,Ltd.), pellets of recycled resin were obtained from the reinforced sheet. The processing temperature was 200°C and impurities were removed using a 200 mesh.

Method C: Using a waste plastic volume reduction machine (manufactured by Meinou), a volume-reduced flake material was produced from the reinforced sheet, and the volume-reduced flake material was sieved and sorted to make the shape more uniform, thereby obtaining a recycled resin. The processing temperature of the volume reduction machine was 200°C. As a sieve, a mesh with a 5 mm aperture was used.

For the recycled resins obtained from these methods, measurements were performed in terms of MFR, tensile yield stress, tensile fracture stress, nominal tensile strain at break, flexural strength, flexural modulus, and Charpy impact strength.

MFR was measured according to ISO 1133 at 230°C with a load of 2.16 kg. Tensile yield stress, tensile fracture stress, and nominal tensile strain at break were measured according to ISO 527-1 at a tensile speed of 50 mm/min. Flexural strength and flexural modulus were measured according to ISO 178. Charpy impact strength was measured according to ISO 179 using a notched specimen. The measurement results of these physical properties are shown in Table 7.

**[Table 7]**

| | Example 1 | | |
|---|---|---|---|
| | Method A | Method B | Method C |
| MFR (g/10 min) | 21.69 | 21.55 | 23.47 |
| Tensile yield stress (MPa) | 13.4 | 12.8 | 13.2 |
| Tensile fracture stress (MPa) | Not fractured | Not fractured | Not fractured |
| Nominal tensile fracture strain (%) | 435 or more | 435 or more | 435 or more |
| Flexural strength (MPa) | 15.1 | 14.6 | 15.2 |
| Flexural modulus (MPa) | 407 | 389 | 414 |
| Charpy impact strength (kJ/m²) | 19.17 | 23.46 | 19.76 |

As shown in Table 7, whichever of Methods A to C was used, the MFR of the recycled resin was in the range of 21 g/10 min to 24 g/10 min, showing values suitable for injection molding or extrusion molding. Compared to Table 3, MFR and flexural modulus are higher than those of the resin composition of the flame-retardant layers and lower than those of the recycled resin of the reinforcement layer. Nominal tensile strain at break is 435% or more, and Charpy impact strength is smaller than that of the resin composition of the flame-retardant layers and larger than that of the recycled resin of the reinforcement layer. Accordingly, it can be said that the physical properties of the resin of the reinforcement layer are compensated by the physical properties of the resin of the flame-retardant layers, and a good recycled resin is obtained in terms of softness, stretchability, and viscosity.

### <Processability of recycled resin>

The recycled resins obtained in Methods A to C were subjected to two types of molding tests.

### [Single-layer forming test using small T-die]

The recycled resin was molded into a sheet shape using the following device under the following conditions.
Device used: T-die extrusion molding machine (manufactured by Plastics Technology Co., Ltd, PLABOR Research Laboratory)
Die width: 150 mm
Molding temperature: 230°C
Take-up rate: 2.9 m/min
Film thickness: 80 µm
Preprocessing of pellets: Dried with hot air at 80°C for 8 hours or more to remove moisture.
Moisture content of pellets: 349.00 ppm (Karl Fischer method, heating temperature: 220°C, endpoint drift value: 0.1 µg/s or less)

As a result of the test, a very clean sheet could be produced from each recycled resin.

### [Extrusion lamination test using small T-die]

Device use: T-die extrusion sandwich lamination machine
Die width: 400 mm
Molding temperature: 250°C
Take-up rate: Conducted at 10m/min, 20m/min, 25m/min, 30m/min, and 40m/min.
White fabric supplied: Polypropylene woven fabric
Film thickness: 80 µm
Preprocessing of pellets: Dried with hot air at 80°C for 8 hours or more to remove moisture.
Moisture content of pellets: 349.00 ppm (Karl Fischer method, heating temperature: 220°C, endpoint drift value: 0.1 µg/s or less)

As a result of the test, a very clean sheet could be produced from each recycled resin, for each of the low to high take-up rates of 10 m/min to 40 m/min.

From these results, it was confirmed that a recycled resin having high processability for sheet processing could be obtained from the flame-retardant polyolefin-based reinforced sheet of Example 1.

### (Configuration of flame-retardant polyolefin-based reinforced sheet of Example 2)

A flame-retardant polyolefin-based reinforced sheet of Example 2 including flame-retardant layers, a reinforcement layer, and reception layers was obtained using materials and production method similar to those of Example 1 except that part of the polyolefin-based resin was replaced by a biomass polyethylene resin (SBC818 manufactured by Braskem) in the resin composition used for forming the flame-retardant layers. The blending ratio of the biomass polyethylene resin was 10% relative to the total mass of the flame-retardant layers. As in Example 1, the reinforced sheet of Example 2 had a configuration in which reception layers were formed on both respective surfaces of the laminate in which a reinforcement layer was sandwiched between two flame-retardant layers.

### (Evaluation of flame retardancy)

The flame-retardant polyolefin-based reinforced sheet of Example 2 was subjected to fire-resistance testing using the 45° micro-burner method and the 45° coil method specified in the Ministry of Internal Affairs and Communications Ordinance on fire-resistance performance testing method. In the preprocessing, the reinforced sheet was immersed in 50°C warm water for 30 minutes. The results of the testing using the 45° micro-burner method are shown in Table 8, and the results of the testing using the 45° coil method are shown in Table 9. The samples used for the 45° micro-burner method are different from the samples used for the 45° coil method.

**[Table 8]**

| Evaluation item | | Example 2 | | |
|---|---|---|---|---|
| | | Sample 1 | Sample 2 | Sample 3 |
| 1-minute heating | Residual flame duration (sec.) | 0.0 | 0.0 | 0.0 |
| | Afterglow duration (sec.) | 0.0 | 0.0 | 0.0 |
| | Carbonized area (cm²) | 7.6 | 6.7 | 7.3 |
| 3-second heating after ignition | Residual flame duration (sec.) | 0.0 | 0.8 | - |
| | Afterglow duration (sec.) | 0.0 | 0.8 | - |
| | Carbonized area (cm²) | 5.3 | 6.6 | - |

**[Table 9]**

| Evaluation item | Example 2 | | | | |
|---|---|---|---|---|---|
| | Sample 1 | Sample 2 | Sample 3 | Sample 4 | Sample 5 |
| Number of flame contacts | 3 | 3 | 3 | 3 | 3 |

As shown in Tables 8 and 9, the flame-retardant polyolefin-based reinforced sheet of Example 2 exhibited good fire resistance. Accordingly, it was confirmed that even if the polyolefin-based resin contains a biomass resin, sufficient flame retardancy could be achieved.

### (Evaluation of recyclability)

The flame-retardant polyolefin-based reinforced sheet of Example 2 was subjected to material recycling using a small re-pelletizing machine (manufactured by Nihon Yuki Co., Ltd.) at a processing temperature of 210°C, thereby obtaining a recycled resin. The MFR of the recycled resin was measured according to ISO 1133 at 230°C with a load of 2.16 kg. As a result, the MFR of the recycled resin was 21.25 g/10 min. Thus, it was confirmed that a recycled resin having high processability could be obtained from the reinforced sheet of Example 2.

As described in the embodiments and examples so far, the following effects can be achieved according to the flame-retardant polyolefin-based reinforced sheet 10.
(1) The recycled resin of the flame-retardant polyolefin-based reinforced sheet 10 has an MFR of 10 g/10 min or more and 50 g/10 min or less. Thus, the recycled resin achieves good processability for injection molding or extrusion molding.
(2) The flame-retardant layer 11 contains, by mass ratio, 40% or more and 80% or less of the polyolefin-based resin, 10% or more and 20% or less of the bromine-based compound, and 3% or more and 20% or less of the white pigment. With this composition, flame retardancy of the flame-retardant layer 11 can be ensured and concealability is preferably achieved by the white pigment. Also, good physical properties are easily obtained for the recycled resin of the reinforced sheet 10.
(3) The flame-retardant layer 11 is made of a resin composition having an MFR of 8 g/10min or more and 30 g/10 min or less. With this configuration, the resin composition achieves high suitability for T-die extrusion molding. By forming the flame-retardant layer 11 using T-die extrusion molding, the flame-retardant layer 11 can have a reduced thickness, resultantly reducing the weight of the reinforced sheet 10.
(4) If the thickness of the flame-retardant layer 11 is 30 µm or more and 200 µm or less, the reinforced sheet 10 can have a reduced weight.
(5) The polyolefin-based fibers constituting the reinforcement layer 12 has a dry-heat dimensional change ratio in the range of -5% to -50% at 150°C. Thus, thermal contraction occurs in the reinforcement layer 12 when the reinforced sheet 10 is ignited, which moves away from the fire source and at the same time allows the residual flame in the molten portions to self-extinguish.
(6) The flame-retardant layer 11 is made of a resin composition having an MFR lower than that of the resin constituting the polyolefin-based fibers of the reinforcement layer 12. Furthermore, the flame-retardant layer 11 is made of a resin composition having a flexural modulus lower than that of the resin constituting the polyolefin-based fibers of the reinforcement layer 12. With this configuration, the reinforcement function of the reinforcement layer 12 is reliably ensured, and at the same time the resin forming the flame-retardant layer 11 compensates the physical properties of the resin forming the reinforcement layer 12, resultantly suppressing the occurrence of unevenness in the properties of the recycled resin of the reinforced sheet 10, thereby achieving a high-quality recycled resin.
(7) As long as the reinforcement layer 12 is sandwiched between two flame-retardant layers 11, strength is enhanced compared to the case of a two-layer structure. Furthermore, since the reinforced sheet 10 can also have enhanced rigidity, the reinforced sheet 10 can be easily handled during the printing step, etc. In addition, the reinforced sheet 10 is less likely to undergo warpage.
(8) As long as the flame-retardant layer 11 is sandwiched between two reinforcement layers 12, strength is enhanced compared to the case of a two-layer structure. Furthermore, since the reinforced sheet 10 can also have enhanced rigidity, the reinforced sheet 10 can be easily handled during the printing step, etc. In addition, since the unique texture of fabric is apparent in the appearance of the reinforced sheet 10, the reinforced sheet 10 can also have enhanced aesthetic properties. Also, visibility of wrinkles can also be suppressed on the front surface of the reinforced sheet 10.
(9) Since the reinforced sheet 10 has a printable surface, the reinforced sheet 10 can be preferably used as a decorative material.
(10) If the polyolefin-based fibers of the reinforcement layer 12 contain a pigment, concealability is enhanced by the reinforcement layer 12, and visibility via the sheet can be suppressed if printing is provided to the surface of the reinforced sheet 10. Thus, the reinforced sheet 10 can be preferably used as a decorative material.

### [Reference Signs List]

- 10, 10A, 10B, 10C: Flame-retardant polyolefin-based reinforced sheet
- 11: Flame-retardant layer
- 12: Reinforcement layer
- 13: Reception layer

## Claims

1. A flame-retardant polyolefin-based reinforced sheet, comprising
a flame-retardant layer containing a polyolefin-based resin and a flame retardant; and
a reinforcement layer constituted of polyolefin-based fibers, wherein
a recycled resin obtained by subjecting the reinforced sheet to material recycling has a melt flow rate of 10 g/10min or more and 50 g/10 min or less at 230°C with a load of 2.16 kg.

2. The flame-retardant polyolefin-based reinforced sheet according to claim 1, wherein
the flame-retardant layer contains a bromine-based compound as the flame retardant and a white pigment; and
the flame-retardant layer contains, by mass ratio, 40% or more and 80% or less of the polyolefin-based resin, 10% or more and 20% or less of the bromine-based compound, and 3% or more and 20% or less of the white pigment.

3. The flame-retardant polyolefin-based reinforced sheet according to claim 1, wherein
the flame-retardant layer is constituted of a resin composition having a melt flow rate of 8 g/10 min or more and 30 g/10 min or less at 230°C with a load of 2.16 kg.

4. The flame-retardant polyolefin-based reinforced sheet according to claim 1, wherein
the flame-retardant layer has a thickness of 30 µm or more and 200 µm or less.

5. The flame-retardant polyolefin-based reinforced sheet according to claim 1, wherein
the polyolefin-based fibers have a dry-heat dimensional change ratio in a range of -5% to -50% at 150°C.

6. The flame-retardant polyolefin-based reinforced sheet according to claim 1, wherein
the flame-retardant layer is constituted of a resin composition having a melt flow rate lower than that of the resin constituting the polyolefin-based fibers.

7. The flame-retardant polyolefin-based reinforced sheet according to claim 1, wherein
the flame-retardant layer is constituted of a resin composition having a flexural modulus lower than that of the resin constituting the polyolefin-based fibers.

8. The flame-retardant polyolefin-based reinforced sheet according to claim 1, comprising
one reinforcement layer and two flame-retardant layers sandwiching the reinforcement layer.

9. The flame-retardant polyolefin-based reinforced sheet according to claim 1, comprising
one flame-retardant layer and two reinforcement layers sandwiching the flame-retardant layer.

10. The flame-retardant polyolefin-based reinforced sheet according to claim 1, wherein
the reinforced sheet has a printable surface.

11. The flame-retardant polyolefin-based reinforced sheet according to claim 10, wherein
the polyolefin-based fibers contain a pigment.
